# EUROPEAN PATENT SPECIFICATION

(11) **EP 2 270 288 B1**
(45) Date of publication and mention of the grant of the patent: **07.08.2013**
(21) Application number: 09012097.3
(22) Date of filing: 23.09.2009
(51) Int. Cl.: E04C 3/32, E04G 23/02, E04H 12/22, E04H 12/10

(54) **Reinforcement device for increasing buckling resistance and method of fastening the same**
Verstärkungsvorrichtung zur Erhöhung Knickwiderstandes und Befestigungsverfahren dafür
Dispositif de renfort pour augmenter de la résistance à la flexion et procédé de fixation de ce dispositif

(30) Priority: 26.09.2008 KR 20080094654
(43) Date of publication of application: 05.01.2011
(73) Proprietor: KOREA ELECTRIC POWER CORPORATION, Seoul 135-791 (KR)
(72) Inventor: Kim, Kang, Sik, Daejeon 305-280 (KR); Kwon, Ki, Joo, Daejeon 305-280 (KR)
(74) Representative: Hörschler, Wolfram Johannes

(56) References cited:
- JP-A- 2005 336 742
- JP-A- 2006 028 902
- US-A- 5 471 810
- US-A1- 2007 256 388

## Description

### BACKGROUND OF THE INVENTION

### 1. Field of the Invention

The present invention relates to a reinforcement device for compression buckling strength and a method of fastening the same, which can improve compression buckling strength in a detachable manner, without power interruption of transmission lines, member disassembly or field preparation, so as to prevent an angle-type steel-frame member for a steel-frame structure or a steel power-transmission tower from undergoing compression buckling and accidental eccentricity.

### 2. Description of the Related Art

JP 2006/028902 A *is related to an earthquake resistant reinforcing structure of an existing steel tower. An adhesion preventive coat prevents the adhesion of mortar or concrete over the outside in the longitudinal direction of a steel-made closed section member or steel-made L-shaped section members of the steel tower. Cylindrical buckling restrained members are constituted by connecting a plurality of split type buckling restrained pieces to each other being arranged on the outside of the steel-made closed section members or the L-shaped section members forming the adhesion preventive coats so as to surround them. The mortar or the concrete is filled or solidified between the adhesion preventive coat and the cylindrical buckling restrained members. Short local section buckling prevention reinforcing members opposite and an interval in the longitudinal direction of the steel-made closed section member or the L-shaped section members are fixed.*

In general, a steel power-transmission tower has a truss structure, which is designed to connect steel-frame members triangularly and use tension and compressive force of the members to resist external force. Since the truss structure enables construction of a lightweight and rigid structure, it is believed to be effective against earthquakes. Here, an angle-type steel-frame member is employed not only as the steel-frame member for the steel power-transmission tower having the truss structure, but also as a brace for resisting lateral force in the steel-frame structure.

However, since the angle-type steel-frame members are vulnerable to compression buckling and accidental eccentricity, the angle-type steel-frame members are liable to fall in succession if an unexpected typhoon, strong wind or the like causes any one member to buckle. Thus, it is very important to manage straightness and partial distortion of the member.

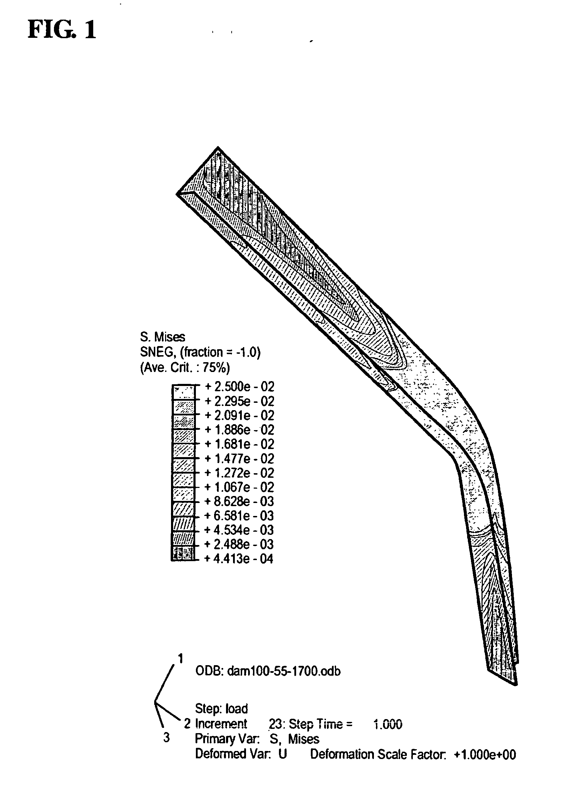

Referring to Fig. 1, if a post of an angle-type steel-frame member is longer than a cross section thereof, the angle-type steel-frame member (an L-shaped steel corner post) receives a compressive load at opposite ends thereof and suddenly buckles when the load reaches a predetermined level.

For this reason, replacement of the steel-frame member with one having a large cross-sectional area or attachment of a plate thereto using a bolt has been suggested to reinforce the angle-type steel-frame member. However, for the steel power-transmission tower, these methods have problems in that many processes such as stoppage of power supply, member disassembly, preparation for reinforcement, and so on are needed. Further, conventional reinforcement operation for the angle-type steel-frame member requires various preceding operations, such as transmission line bypass, working diagram preparation, work-plan establishment, and the like, which consume considerable time and expenses.

### SUMMARY OF THE INVENTION

Therefore, the present invention is directed to solving the above and other problems of the related art, and an aspect of the invention is to provide a reinforcement device for compression buckling strength and a method of fastening the same, which can improve compression buckling strength in a detachable manner without power interruption of transmission lines, member disassembly or field preparation, so as to prevent an angle-type steel-frame member for a steel-frame structure or a steel power-transmission tower from undergoing compression buckling and accidental eccentricity.

In accordance with an aspect, the invention provides a reinforcement device for compression buckling strength including: a member seating body surrounding an angle-type steel-frame member; first and second securing couplers securing opposite ends of the angle-type steel-frame member and opposite ends of the member seating body, the first and second securing couplers being adjustable to meet a standard of the angle-type steel-frame member; *and a supporter position in a space where the angle-type steel-frame member forms a right angle and supporting the angle-type steel-frame member, characterized in that the reinforcement device further comprises* a horizontal engaging element connecting the first and second securing couplers with each other; and a reinforcing bar connecting the supporter and the horizontal engaging element.

The member seating body may have an L-shape or an inverse-L shape to surround the angle-type steel-frame member.

The first securing coupler may include a first hole into which one end of the member seating body is inserted; a second hole into which one end of the horizontal engaging element is inserted; and a first groove into which one end of the angle-type steel-frame member is inserted.

The first securing coupler may further include a first round-bar engaging member securing one end of the member seating body inserted into the first hole of the first securing coupler; a second round-bar engaging member securing one end of the horizontal engaging element inserted into the second hole of the first securing coupler; and a first securing bolt securing one end of the angle-type steel-frame member inserted into the first groove of the first securing coupler.

The first securing coupler may include a first straddle groove on which one end of the member seating body is straddled; a second straddle groove on which one end of the horizontal engaging element is straddled; and a first groove in which one end of the angle-type steel-frame member is inserted.

The second securing coupler may include a third hole into which the other end of the member seating body is inserted and secured; a fourth hole into which the other end of the horizontal engaging element is inserted; and a second groove into which the other end of the angle-type steel-frame member is inserted.

The first securing coupler may further include a third round-bar engaging member securing one end of the member seating body inserted into the third hole of the second securing coupler; a fourth round-bar engaging member securing one end of the horizontal engaging element inserted into the fourth hole of the second securing coupler; and a second securing bolt securing one end of the angle-type steel-frame member inserted into the second groove of the second securing coupler.

The second securing coupler may include a third straddle groove on which the other end of the member seating body is straddled; a fourth straddle groove on which the other end of the horizontal engaging element is straddled; and a second groove in which the other end of the angle-type steel-frame member is inserted.

The reinforcing bar may be a rectangular frame with a plurality of reinforcing holes to cross-connect the supporter and the horizontal engaging element.

In accordance with another aspect, the invention provides a method of fastening a reinforcement device for compression buckling strength, including: securing an angle-type steel-frame member and a member seating body to first and second securing couplers; and cross-securing a supporter and a horizontal engaging element to each other by positioning a reinforcing bar in the angle-type steel frame member.

The securing an angle-type steel-frame member and a member seating body to first and second securing couplers may include inserting and securing one end of the angle-type steel-frame member in a first groove of the first securing coupler by a first securing bolt; inserting and securing the other end of the angle-type steel-frame member in a second groove of the second securing coupler by a second securing bolt; inserting and securing one end of the member seating body in a first hole of the first securing coupler by a first round-bar engaging member; and inserting and securing the other end of the member seating body in a third hole of the second securing coupler by a third round-bar engaging member.

The securing an angle-type steel-frame member and a member seating body to first and second securing couplers may include using the first round-bar engaging member and the third round-bar engaging member to secure the member seating body while adjusting the member seating body to meet a standard of the angle-type steel-frame member.

### BRIEF DESCRIPTION OF THE DRAWINGS

The above and other aspects, features and advantages of the invention will become apparent from the following description of exemplary embodiments given in conjunction with the accompanying drawings, in which:
Fig. 1 shows buckling of an angle-type steel-frame member used in a conventional steel power-transmission tower or steel-frame structure;
Fig. 2 is a perspective view of an angle-type steel-frame member provided with a reinforcement device for compression buckling strength according to one embodiment of the present invention;
Fig. 3 is a detailed sectional view of the reinforcement device of Fig. 2;
Figs. 4a and 4b are sectional views of a method of fastening the reinforcement device of Fig. 3 to an angle-type steel-frame member;
Fig. 5 shows that an angle-type steel-frame member is reinforced by a reinforcement device for compression buckling strength according to one embodiment of the present invention; and
Fig. 6 is a perspective view of another example of first and second securing couplers according to an exemplary embodiment of the present invention.

### DETAILED DESCRIPTION OF THE PREFERRED EMBODIMENTS

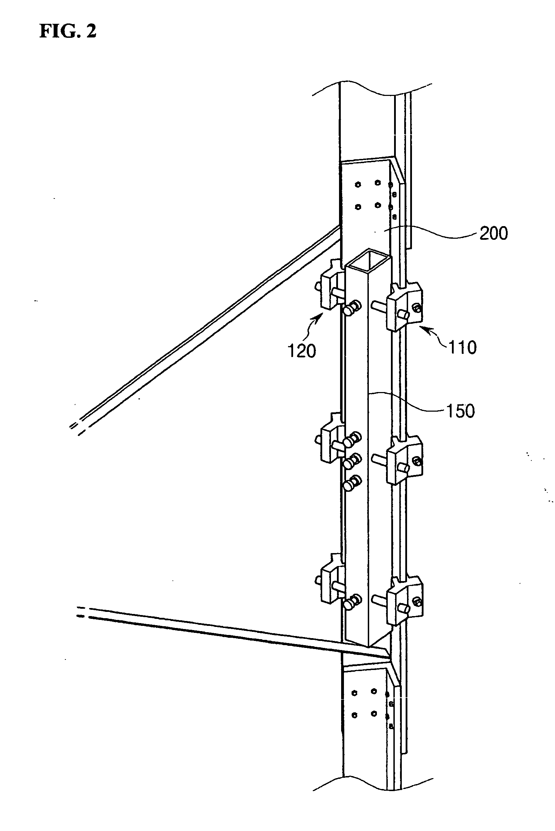

Hereinafter, exemplary embodiments of the present invention will be described in more detail with reference to Figs. 2 to 6.

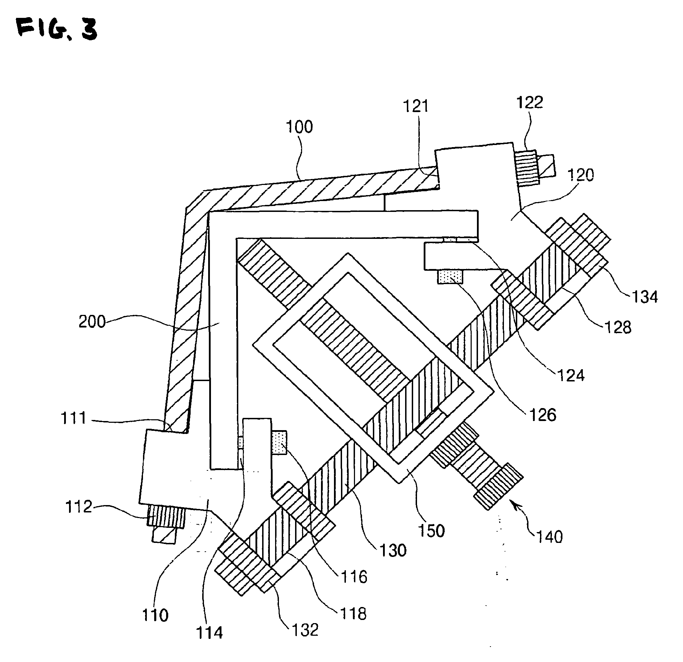

Fig. 2 is a perspective view of an angle-type steel-frame member provided with a reinforcement device for compression buckling strength according to one embodiment of the invention, and Fig. 3 is a detailed sectional view of the reinforcement device of Fig. 2.

In general, a steel power-transmission tower has a truss structure, which is designed to connect steel-frame members triangularly and use tension and compressive force of the members to resist external force. The truss structure is believed to be effective against earthquakes since it enables construction of a lightweight and rigid structure. Here, an angle-type steel-frame member 200 is employed as the steel-frame member for the steel power-transmission tower having the truss structure and is also employed as a brace for resisting lateral force in a steel-frame structure. Further, the angle-type steel-frame member 200 includes a detachable reinforcement device for compression buckling strength, thereby preventing compression buckling and accidental eccentricity. To this end, the reinforcement device includes a member seating body 100 surrounding the angle-type steel-frame member 200; first and second securing couplers 110, 120 securing opposite ends of the angle-type steel-frame member 200 and opposite ends of the member seating body 100, and adjustable to meet a standard of the angle-type steel frame member 200; a horizontal engaging element 130 connecting the first and second securing couplers 110, 120 with each other; a supporter 140 positioned in a space where the angle-type steel-frame member 200 forms a right angle and supporting the angle-type steel-frame member 200; and a reinforcing bar 150 connecting the supporter 140 and the horizontal engaging element 130.

The member seating body 100 has an L-shape or an inverse-L shape to surround the angle-type steel-frame member 200, as shown in Fig. 3. The member seating body 100 may be a round-bar having an "L" or inverse-"L" shape. Here, the member seating body 100 is formed to have a larger angle than the angle-type steel-frame member 200.

The first securing coupler 110 includes a first hole 111 into which one end of the member seating body 100 is inserted and secured; a first groove 114 into which one end of the angle-type steel-frame member 200 is inserted and secured; and a second hole 118 into which one end of the horizontal engaging element 130 is inserted and secured. Here, the one end of the member seating body 100 is inserted into the first hole 111 of the first securing coupler 110 and secured thereto by a first round-bar engaging member 112; the one end of the angle-type steel-frame member 200 is inserted into the first groove 114 of the first securing coupler 110 and secured thereto by a first securing bolt 116; and the one end of the horizontal engaging element 130 is inserted into the second hole 118 and secured thereto by a second round-bar engaging member 132.

Here, the first groove 114 of the first securing coupler 110 is formed to have a size to receive the one end of the angle-type steel-frame member 200.

The second securing coupler 120 includes a third hole 221 into which the other end of the member seating body 100 is inserted and secured; a second groove 124 into which the other end of the angle-type steel-frame member 200 is inserted and secured; and a fourth hole 128 into which the other end of the horizontal engaging element 130 is inserted and secured. Here, the other end of the member seating body 100 is inserted into the third hole 221 of the second securing coupler 110 and secured thereto by a third round-bar engaging member 122; the other end of the angle-type steel-frame member 200 is inserted into the second groove 124 of the second securing coupler 120 and secured thereto by a second securing bolt 126; and the other end of the horizontal engaging element 130 is inserted into the fourth hole 128 and secured thereto by a fourth round-bar engaging member 134.

Here, the second groove 124 of the second securing coupler 120 is formed to have a size to receive the other end of the angle-type steel-frame member 200.

On the other hand, the one end of the member seating body 100 is inserted into the first hole 111 of the first securing coupler 110, and the other end of the member seating body 100 is then inserted into the third hole 221 of the second securing coupler 120. Then, the opposite ends of the member seating body 110 are adjusted to meet the standard of the angle-type steel-frame member 200 while being fastened by the first and third round-bar engaging members 112, 122.

The horizontal engaging element 130 may be an elongated round-bar to connect the first and second securing couplers 110, 120 with each other. The horizontal engaging element 130 is inserted into the first and second securing couplers 110, 120 while penetrating the reinforcing bar 150.

The supporter 140 has a rod shape and is positioned in a space where the angle-type steel-frame member 200 forms a right angle, and penetrates the reinforcing bar 150. The supporter 140 includes an elongated member-fastening bolt and a reinforcing-bar securing bolt which is shorter than the member-fastening bolt.

The reinforcing bar 150 is formed as a rectangular frame that has a plurality of reinforcing holes to cross-connect the supporter 140 and the horizontal engaging element 130.

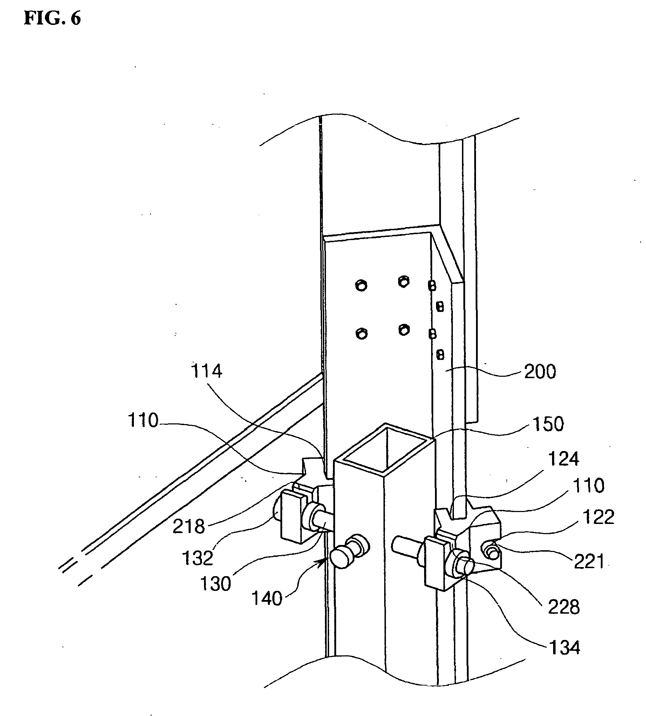

On the other hand, the first and second securing couplers 110, 120 are formed with the first to fourth holes 111, 118, 121, 128 into which the member seating body 100 and the horizontal engaging element 130 are inserted and secured, respectively. Alternatively, as shown in Fig. 6, the first securing coupler 110 may be formed with a first straddle groove 211 on which the one end of the member seating body 100 is straddled, and a second straddle groove 218 on which the one end of the horizontal engaging element 130 is straddled.

Likewise, the second securing coupler 120 may be formed with a third straddle groove 211 on which the other end of the member seating body 100 is straddled, and a fourth straddle groove 228 on which the other end of the horizontal engaging element 130 is straddled.

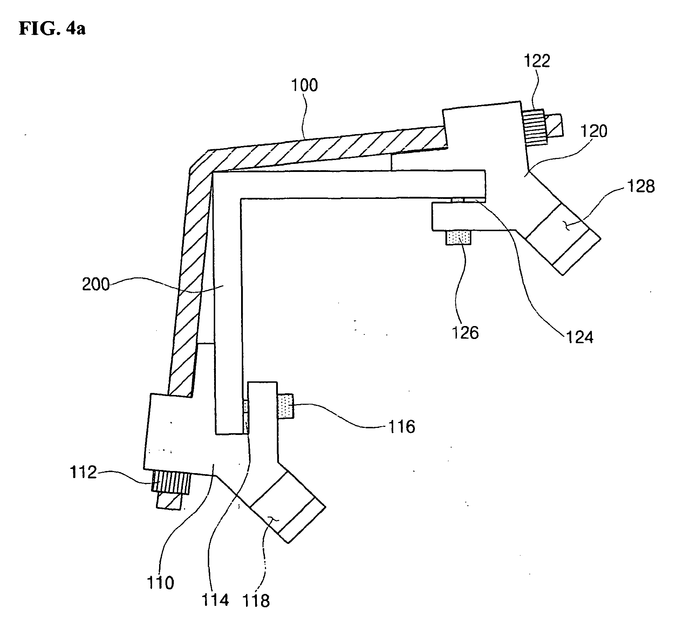

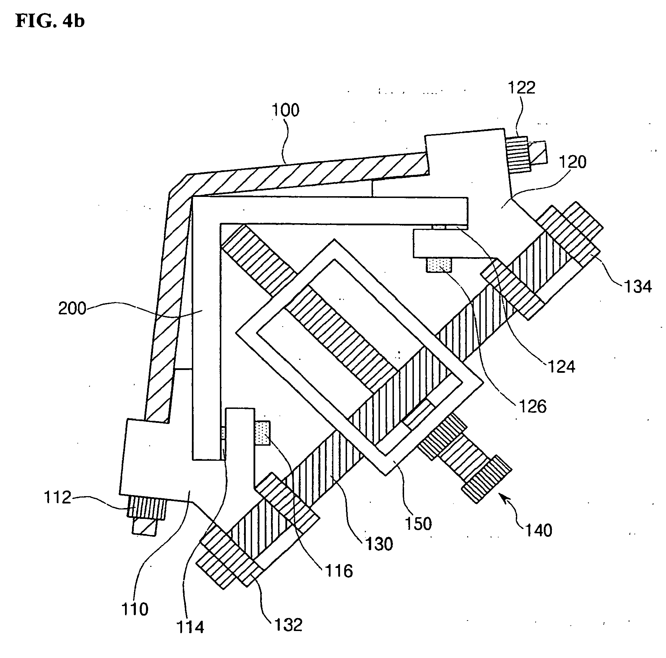

Figs. 4a and 4b are sectional views of a method of fastening the reinforcement device of Fig. 3 to an angle-type steel-frame member.

In this embodiment, the method of fastening the reinforcement device includes: securing the angle-type steel-frame member 200 and the member seating body 100 to the first and second securing couplers 110, 210; and cross-securing the supporter 140 and the horizontal engaging element 130 to each other by positioning the reinforcing bar 150 in the angle-type steel frame member 200. As shown in Fig. 6, the first and second securing couplers 110, 120 may be formed with the first to fourth straddle grooves 211, 218, 221, 228. However, in this embodiment, the method will be described with reference to the embodiment wherein the first and second securing couplers 110, 120 are formed with the first to fourth holes 111, 118, 121, 128.

First, as shown in Fig. 4a, the one end of the angle-type steel-frame member 200 is inserted into the first groove 114 of the first securing coupler 110 and then secured thereby by the first securing bolt 116, and the other end of the angle-type steel-frame member 200 is inserted into the second groove 124 of the second securing coupler 120 and secured thereby by the second securing bolt 126. Further, the one end of the member seating body 100 is inserted into the first hole 111 of the first securing coupler 110 and secured thereto by the first round-bar engaging member 112, and the other end of the member seating body 100 is inserted into the third hole 221 of the second securing coupler 120 and secured thereto by the third round-bar engaging member 122. Here, the first round-bar engaging member 112 and the third round-bar engaging member 122 are used to secure the member seating body 100 while adjusting the member seating body 100 to meet the standard of the angle-type steel-frame member 200.

Then, as shown in Fig. 4b, the reinforcing bar 150 is positioned in the angle-type steel-frame member 200, so that the horizontal engaging element 130 and the supporter 140 can be secured while penetrating the reinforcing bar 150 via the plurality of reinforcing holes to cross with each other. Here, the one end of the horizontal engaging element 130 is inserted into the second hole 118 of the first securing coupler 110 and is secured thereto by the third securing bolt 132, and the other end of the horizontal engaging element 130 is inserted into the fourth hole 128 of the second securing coupler 120 and is secured thereto by the fourth securing bolt 134.

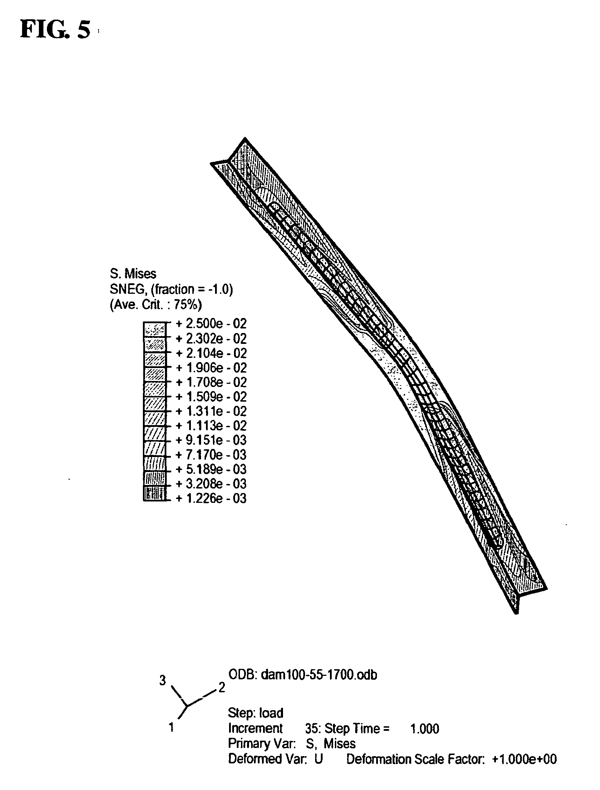

As such, the angle-type steel-frame member is reinforced by the reinforcement device for compression buckling strength, so that the compression buckling strength is enhanced as shown in Fig. 5, thereby preventing the angle-type steel-frame member from buckling. Further, the reinforcement device is detachably and simply mounted to the middle of the angle-type steel-frame member without power interruption of transmission lines, member disassembly or field preparation, thereby improving compression buckling strength of the angle-type steel-frame member.

That is, the reinforcement device according to this embodiment can improve the compression buckling strength of the angle-type steel-frame member by being detachably mounted to the angle-type steel-frame member. Since the reinforcement device is detachably mounted thereto, there is no need for power interruption of transmission lines, processing a bolt hole for coupling a reinforcing member, and disassembling the member.

Further, since the reinforce device according to the embodiment can be rapidly detachably mounted to a target structure for immediate reinforcement, it can be effectively used for safe operation of any structure or transmission line.

Although some embodiments have been provided to illustrate the invention, it will be apparent to those skilled in the art that the embodiments are given by way of illustration, and that various modifications and equivalent embodiments can be made without departing from the spirit and scope of the invention. Accordingly, the scope of the invention should be limited only by the accompanying claims and equivalents thereof.

## Claims

1. A reinforcement device for compression buckling strength, comprising:
a member seating body (100) at least partially surrounding an angle-type steel-frame member (200),
first and second securing couplers(110, 120) securing oppositeliteral ends of the angle-type steel-frame member (200) and opposite lateral ends of the member seating body (100)_{;} the first and second securing couplers (110, 120) being adjustable to meet a standard of the angle-type steel-frame member (200);
a supporter (140) positioned in a space where the angle-type steel-frame member (200) forms a right angle and supporting the angle-type steel-frame member (200); **characterized in that**
the reinforcement device further comprises: a horizontal engaging element (130) connecting the first and second securing couplers (110, 120) at distal end of the reinforcement device with each other;
and
a reinforcing bar (150) connecting the supporter (140) and the horizontal engaging element (130).

2. The reinforcement device according to claim 1, wherein the member seating body (100) has an L-shape or an inverse-L shape to partially surround the angle-type steel-frame member (200).

3. The reinforcement device according to claim 1, wherein the first securing coupler (110) comprises:
a first hole (111) into which one end of the member seating body (100) is inserted;
a second hole (118) into which one end of the horizontal engaging element (130) is inserted; and
a first groove (114) into which one lateral end of the angle-type steel-frame member (200) is inserted.

4. The reinforcement device according to claim 3, wherein the first securing coupler (110) further comprises:
a first round-bar engaging member (112) securing one end of the member seating body (100) inserted into the first hole (111) of the first securing coupler (110);
a second round-bar engaging member (132) securing one end of the horizontal engaging element (130) inserted into the second hole (118) of the first securing coupler (110); and
a first securing bolt (116) securing one lateral end of the angle-type steel-frame member (200) inserted into the first groove (114) of the first securing coupler (110).

5. The reinforcement device according to claim 1, wherein the first securing coupler (110) comprises:
a first straddle groove (211) on which one end of the member seating body (100) is straddled;
a second straddle groove (218) on which one end of the horizontal engaging element (130) is straddled; and
a first groove (114) in which one lateral end of the angle-type steel-frame member (200) is inserted.

6. The reinforcement device according to one of the claims 3 to 5, wherein the second securing coupler (120) comprises:
a third hole (121) into which the other end of the member seating body (100) is inserted and secured;
a fourth hole (128) into which the other end of the horizontal engaging element (130) is inserted; and
a second groove (124) into which the other lateral end of the angle-type steel-frame member (200) is inserted.

7. The reinforcement device according to claim 6, wherein the second securing coupler (120) further comprises:
a third round-bar engaging member (122) securing one end of the member seating body (100) inserted into the third hole (121) of the second securing coupler (120);
a fourth round-bar engaging member (134) securing one end of the horizontal engaging element(130) inserted into the fourth hole of the second securing coupler; and
a second securing bolt (126) securing one end of the angle-type steel-frame member (200) inserted into the second groove (124) of the second securing coupler (120).

8. The reinforcement device according to one of the claims 3 to 5, wherein the second securing coupler (120) comprises:
a third straddle groove (121) on which the other end of the member seating body (100) is straddled;
a fourth straddle groove (228) on which the other end of the horizontal engaging element (130) is straddled; and
a second groove (124) in which the other lateral end of the angle-type steel-frame member (200) is inserted.

9. The reinforcement device according to claim 1, wherein the reinforcing bar (150) is a rectangular frame having a plurality of reinforcing holes to cross-connect the supporter (140) and the horizontal engaging element (130).

10. A method of fastening a reinforcement device according to claim 1 for compression buckling strength,
**characterized in that**
said method comprises:
securing an angle-type steel-frame member (200) and a member seating body (100) to first and second securing couplers (110, 120); and
cross-securing a supporter (140) and a horizontal engaging element (130) to each other by positioning a reinforcing bar (150) in the angle-type steel frame member (200).

11. The method according to claim 10, wherein the securing an angle-type steel-frame member (200) and a member seating body (100) to first and second securing couplers (110, 120) comprises:
inserting and securing one lateral end of the angle-type steel-frame member (200) into a first groove (114) of the first securing coupler (110) by a first securing bolt (116);
inserting and securing the other lateral end of the angle-type steel-frame member (200) into a second groove (124) of the second securing coupler (120) by a second securing bolt (126);
inserting and securing one end of the member seating body (100) into a first hole (111) of the first securing coupler (110) by a first round-bar engaging member (112); and
inserting and securing the other end of the member seating body (100) into a third hole (121) of the second securing coupler (120) by a third round-bar engaging member (122).

12. The method according to claim 11, wherein the securing an angle-type steel-frame member (200) and a member seating body (100) to first and second securing couplers (110, 120) comprises using the first round-bar engaging member (112) and the third round-bar engaging member (122) to secure the member seating body (100) while adjusting the member seating body (100) to meet a standard of the angle-type steel-frame member (200).

## Patentansprüche

1. Eine Verstärkungsvorrichtung für Druckknickfestigkeit, umfassend:
einen Elementsetzkörper (100), der zumindest teilweise von einem winkelförmigen Stahlrahmenelement (200) umgibt,
erste und zweite Sicherungskupplungen (110, 120), die gegenüberliegende seitliche Enden des winkelförmigen Stahlrahmenelements (200) und gegenüberliegende seitliche Enden des Elementsetzkörpers (100) sichern, wobei die ersten und zweiten Sicherungskupplungen (110, 120) einstellbar sind um eine Norm des winkelförmigen Stahlrahmenelements (200) einzuhalten;
einen Träger (140), der in einem Raum positioniert ist, wo das winkelförmige Stahlrahmenelement (200) einen rechten Winkel ausbildet und das winkelförmige Stahlrahmenelement (200) stützt; **dadurch gekennzeichnet, dass**
die Verstärkungsvorrichtung ferner umfasst: ein Horizontaleingriffelement (130), das die ersten und zweiten Sicherungskupplungen (110, 120) an einem distalen Ende der Verstärkungsvorrichtung miteinander verbindet; und
einen Verstärkungsträger (150), der den Träger (140) und das Horizontaleingriffelement (130) verbindet.

2. Die Verstärkungsvorrichtung gemäß Anspruch 1, wobei der Elementsetzkörper (100) eine L-Form oder eine seitenverkehrte L-Form aufweist, um das winkelförmige Stahlrahmenelement (200) teilweise zu umgeben.

3. Die Verstärkungsvorrichtung gemäß Anspruch 1, wobei die erste Sicherungskupplung (110) umfasst:
ein erstes Loch (111), in das ein Ende des Elementsetzkörpers (100) eingesetzt ist;
ein zweites Loch (118), in das ein Ende des Horizontaleingriffelements (130) eingesetzt ist; und
eine erste Nut (114), in die ein seitliches Ende des winkelförmigen Stahlrahmenelements (200) eingesetzt ist.

4. Die Verstärkungsvorrichtung gemäß Anspruch 3, wobei die erste Sicherungskupplung ferner umfasst:
ein erstes Rundstabeingriffelement (112), das ein Ende des Elementsetzkörpers (100) sichert, das in das erste Loch (111) der ersten Sicherungskupplung eingesetzt ist;
ein zweites Rundstabeingriffelement (132), das eine Ende des Horizontaleingriffelements (130) sichert, das in das zweite Loch (118) der ersten Sicherungskupplung (110) eingesetzt ist; und
ein erster Sicherungsbolzen (116), der ein seitliches Ende des winkelförmigen Stahlrahmenelements (200) sichert, das in die erste Nut (114) der ersten Sicherungskupplung (110) eingesetzt ist.

5. Die Verstärkungsvorrichtung gemäß Anspruch 1, wobei die zweite Sicherungskupplung (110) umfasst:
eine erste Spreiznut (211), an der ein Ende des Elementsetzkörpers (100) gespreizt ist;
eine zweite Spreiznut (218), an der eine Ende des Horizontaleingriffelements (130) gespreizt ist; und
eine erste Nut (114), in der ein seitliches Ende des winkelförmigen Stahlrahmenelements (200) eingesetzt ist.

6. Die Verstärkungsvorrichtung gemäß einem der Ansprüche 3 bis 5, wobei die zweite Sicherungskupplung (120) umfasst:
ein drittes Loch (121), in das das andere Ende des Elementsetzkörpers (100) eingesetzt und gesichert ist;
ein viertes Loch (128), in das das andere Ende des Horizontaleingriffelements (130) eingesetzt ist; und
eine zweite Nut (124), in die das andere seitliche Ende des winkelförmigen Stahlrahmenelements (200) eingesetzt ist.

7. Die Verstärkungsvorrichtung gemäß Anspruch 6, wobei die zweite Sicherungskupplung (120) ferner umfasst:
ein drittes Rundstabeingriffelement (122), das ein Ende des Elementsetzkörpers (100) sichert, das in das dritte Loch (121) der zweiten Sicherungskupplung (120) eingesetzt ist;
ein viertes Rundstabeingriffelement (134), das ein Ende des Horizontaleingriffelements (130) sichert, das in das vierte Loch der zweiten Sicherungskupplung eingesetzt ist; und
ein zweiter Sicherungsbolzen (126), der eine Ende des winkelförmigen Stahlrahmenelements (200) sichert, das in die zweite Nut (124) der zweiten Sicherungskupplung (120) eingesetzt ist.

8. Die Verstärkungsvorrichtung gemäß einem der Ansprüche 3 bis 5, wobei die zweite Sicherungskupplung (120) umfasst:
eine dritte Spreiznut (121), an der das andere Ende des Elementsetzkörpers (100) gespreizt ist;
eine vierte Spreiznut (228), an der das andere Ende des Horizontaleingriffelements (130) gespreizt ist; und
eine zweite Nut (124), in die das andere seitliche Ende des winkelförmigen Stahlrahmenelements (200) eingesetzt ist.

9. Die Verstärkungsvorrichtung gemäß Anspruch 1, wobei der Verstärkungsträger (150) ein Rechteckprofilträger ist, der eine Vielzahl von Verstärkungslöchern zum Querverbinden des Trägers (140) und des Horizontaleingriffelements (130) aufweist.

10. Ein Verfahren zum Befestigen einer Verstärkungsvorrichtung gemäß Anspruch 1 für Druckknickfestigkeit, **dadurch gekennzeichnet dass**
das Verfahren umfasst:
Sichern eines winkelförmigen Stahlrahmenelements (200) und eines Elementsicherungskörpers (100) mit ersten und zweiten Sicherungskupplungen (110, 120); und
Aneinander Gegensichern eines Trägers (140) und eine Horizontaleingriffelements (130) durch Positionieren eines Verstärkungsträgers (150) in das winkelförmige Stahlrahmenelement (200).

11. Das Verfahren gemäß Anspruch 10, wobei das Sichern eines winkelförmigen Stahlrahmenelements (200) und eines Elementsetzkörpers (100) an ersten und zweiten Sicherungskupplungen (110, 120) umfasst:
Einsetzen und Sichern eines seitlichen Endes des winkelförmigen Stahlrahmenelements (200) in eine erste Nut (114) der ersten Sicherungskupplung (110) durch einen ersten Sicherungsbolzen (116);
Einsetzen und Sichern des anderen seitlichen Endes des winkelförmigen Stahlrahmenelements (200) in eine zweite Nut (124) der zweiten Sicherungskupplung (120) durch einen zweiten Sicherungsbolzen (126);
Einsetzen und Sichern eines Endes des Elementsetzkörpers (100) in ein erstes Loch (111) der ersten Sicherungskupplung (110) durch ein erstes Rundstabeingriffelement (112); und
Einsetzen und Sichern des anderen Endes des Elementsetzkörpers (100) in ein drittes Loch (121) der zweiten Sicherungskupplung (120) durch ein drittes Rundstabeingriffelement (122).

12. Das Verfahren gemäß Anspruch 11, wobei das Sichern eines winkelförmigen Stahlrahmenelements (200) und eines Elementsetzkörpers (100) an erste und zweite Sicherungskupplungen (110, 120) ein Verwenden des ersten Rundstabeingriffelements (112) und des dritten Rundstabeingriffelements (122) umfasst um den Elementsetzkörper (100) zu sichern während der Elementsetzkörper (100) eingestellt wird um eine Norm des winkelförmigen Stahlrahmenelements (200) einzuhalten.

## Revendications

1. Dispositif de renfort pour la résistance à la flexion, comprenant :
un corps (100) de logement d'organe entourant au moins partiellement un organe (200) d'ossature en acier de type cornière,
des premier et deuxième dispositifs d'accouplement de fixation (110, 120) fixant des extrémités latérales opposées de l'organe (200) d'ossature en acier de type cornière et des extrémités latérales opposées du corps (100) de logement d'organe, les premier et deuxième dispositifs d'accouplement de fixation (110, 120) pouvant être ajustés pour satisfaire à une norme de l'organe (200) d'ossature en acier de type cornière ;
un dispositif de support (140) positionné dans un espace où l'organe (200) d'ossature en acier de type cornière forme un angle droit et supportant l'organe (200) d'ossature en acier de type cornière ;
**caractérisé en ce que**
le dispositif de renfort comprend en outre : un élément d'engagement horizontal (130) raccordant l'un à l'autre les premier et deuxième dispositifs d'accouplement de fixation (110, 120) à une extrémité distale du dispositif de renfort ;
et
une barre de renfort (150) raccordant le dispositif de support (140) et l'élément d'engagement horizontal (130).

2. Dispositif de renfort selon la revendication 1, dans lequel le corps (100) de logement d'organe présente une forme en L ou une forme en L inversé pour entourer partiellement l'organe (200) d'ossature en acier de type cornière.

3. Dispositif de renfort selon la revendication 1, dans lequel le premier dispositif d'accouplement de fixation (110) comprend :
un premier trou (110) à l'intérieur duquel une extrémité du corps (100) de logement d'organe est insérée ;
un deuxième trou (118) à l'intérieur duquel une extrémité de l'élément d'engagement horizontal (130) est insérée ; et
une première rainure (114) à l'intérieur de laquelle une extrémité latérale de l'organe (200) d'ossature en acier de type cornière est insérée.

4. Dispositif de renfort selon la revendication 3, dans lequel le premier dispositif d'accouplement de fixation (110) comprend en outre :
un premier organe (112) d'engagement de barre ronde fixant une extrémité du corps (100) de logement d'organe insérée à l'intérieur du premier trou (111) du premier dispositif d'accouplement de fixation (110) ;
un deuxième organe (132) d'engagement de barre ronde fixant une extrémité de l'élément d'engagement horizontal (130) insérée à l'intérieur du deuxième trou (118) du premier dispositif d'accouplement de fixation (110) ; et
un premier boulon de fixation (116) fixant une extrémité latérale de l'organe (200) d'ossature en acier de type cornière insérée à l'intérieur de la première rainure (114) du premier dispositif d'accouplement de fixation (110).

5. Dispositif de renfort selon la revendication 1, dans lequel le premier dispositif d'accouplement de fixation (110) comprend :
une première rainure de chevauchement (211) chevauchée par une extrémité du corps (100) de logement d'organe ;
une deuxième rainure de chevauchement (218) chevauchée par une extrémité de l'élément d'engagement horizontal (130) ; et
une première rainure (114) dans laquelle une extrémité latérale de l'organe (200) d'ossature en acier de type cornière est insérée.

6. Dispositif de renfort selon l'une des revendications 3 à 5, dans lequel le deuxième dispositif d'accouplement de fixation (120) comprend :
un troisième trou (121) à l'intérieur duquel l'autre extrémité du corps (100) de logement d'organe est insérée et fixée ;
un quatrième trou (128) à l'intérieur duquel l'autre extrémité de l'élément d'engagement horizontal (130) est insérée ; et
une deuxième rainure (124) à l'intérieur de laquelle l'autre extrémité latérale de l'organe (200) d'ossature en acier de type cornière est insérée.

7. Dispositif de renfort selon la revendication 6, dans lequel le deuxième dispositif d'accouplement de fixation (120) comprend en outre :
un troisième organe (122) d'engagement de barre ronde fixant une extrémité du corps (100) de logement d'organe insérée à l'intérieur du troisième trou (121) du deuxième dispositif d'accouplement de fixation (120) ;
un quatrième organe (134) d'engagement de barre ronde fixant une extrémité de l'élément d'engagement horizontal (130) insérée à l'intérieur du quatrième trou du deuxième dispositif d'accouplement de fixation ; et
un deuxième boulon de fixation (126) fixant une extrémité de l'organe (200) d'ossature en acier de type cornière insérée à l'intérieur de la deuxième rainure (124) du deuxième dispositif d'accouplement de fixation (120).

8. Dispositif de renfort selon l'une des revendications 3 à 5, dans lequel le deuxième dispositif d'accouplement de fixation (120) comprend :
une troisième rainure de chevauchement (121) chevauchée par l'autre extrémité du corps (100) de logement d'organe ;
une quatrième rainure de chevauchement (228) chevauchée par l'autre extrémité de l'élément d'engagement horizontal (130) ; et
une deuxième rainure (124) dans laquelle l'autre extrémité latérale de l'organe (200) d'ossature en acier de type cornière est insérée.

9. Dispositif de renfort selon la revendication 1, dans lequel la barre de renfort (150) est une ossature rectangulaire ayant une pluralité de trous de renfort pour raccorder l'un à l'autre le dispositif de support (140) et l'élément d'engagement horizontal (130).

10. Procédé de fixation d'un dispositif de renfort selon la revendication 1 pour la résistance à la flexion,
**caractérisé en ce que**
ledit procédé comprend :
la fixation d'un organe (200) d'ossature en acier de type cornière et d'un corps (100) de logement d'organe à des premier et deuxième dispositifs d'accouplement de fixation (110, 120) ; et
la fixation transversale d'un dispositif de support (140) et d'un élément d'engagement horizontal (130) l'un à l'autre en positionnant une barre de renfort (150) dans l'organe (200) d'ossature en acier de type cornière.

11. Procédé selon la revendication 10, dans lequel la fixation d'un organe (200) d'ossature en acier de type cornière et d'un corps (100) de logement d'organe à des premier et deuxième dispositifs d'accouplement de fixation (110, 120) comprend :
l'insertion et la fixation d'une extrémité latérale de l'organe (200) d'ossature en acier de type cornière à l'intérieur d'une première rainure (114) du premier dispositif d'accouplement de fixation (110) par un premier boulon de fixation (116) ;
l'insertion et la fixation de l'autre extrémité latérale de l'organe (200) d'ossature en acier de type cornière à l'intérieur d'une deuxième rainure (124) du deuxième dispositif d'accouplement de fixation (120) par un deuxième boulon de fixation (126) ;
l'insertion et la fixation d'une extrémité du corps (100) de logement d'organe à l'intérieur d'un premier trou (111) du premier dispositif d'accouplement de fixation (110) par un premier (112) organe d'engagement de barre ronde ; et l'insertion et la fixation de l'autre extrémité du corps (100) de logement d'organe à l'intérieur d'un troisième trou (121) du deuxième dispositif d'accouplement de fixation (120) par un troisième (122) organe d'engagement de barre ronde.

12. Procédé selon la revendication 11, dans lequel la fixation d'un organe (200) d'ossature en acier de type cornière et d'un corps (100) de logement d'organe à des premier et deuxième dispositifs d'accouplement de fixation (110, 120) comprend l'utilisation du premier organe (112) d'engagement de barre ronde et du troisième organe (122) d'engagement de barre ronde pour fixer le corps (100) de logement d'organe tout en ajustant le corps (100) de logement d'organe pour satisfaire à une norme de l'organe (200) d'ossature en acier de type cornière.
